# EUROPÄISCHE PATENTSCHRIFT

(11) **EP 0 797 022 B1**
(45) Veröffentlichungstag und Bekanntmachung des Hinweises auf die Patenterteilung: **06.02.2002**
(21) Anmeldenummer: 97103582.9
(22) Anmeldetag: 05.03.1997
(51) Int. Cl.: F16F 15/12

(54) **Torsionsschwingungsdämpfer**
Torsional vibration damper
Amortisseur de vibrations torsionelles

(30) Priorität: 22.03.1996 DE 19611268; 31.01.1997 DE 19703534
(43) Veröffentlichungstag der Anmeldung: 24.09.1997
(73) Patentinhaber: Patentverwertungsgesellschaft Rohs Voigt mbH, 52351 Düren (DE)
(72) Erfinder: Rohs, Ulrich, Dr.-Ing., 52351 Düren (DE); Heidingsfeld, Dietmar, Dipl.-Ing., 52078 Aachen (DE)
(74) Vertreter: Castell, Klaus, Dr.

(56) Entgegenhaltungen:
- WO-A-95/20728
- US-A- 3 296 887
- US-A- 4 638 684

## Beschreibung

Die Erfindung betrifft einen Torsionsschwingungsdämpfer nach dem Oberbegriff des Patentanspruchs 1.

Ein wesentliches Problem besteht bei Torsionsschwingungsdämpfern und insbesondere bei Reibscheibendämpfern darin, daß die Eigenfrequenz der Schwingungsdämpfer im Drehzahlbereich der Verbrennungsmotoren liegt, deren Drehschwingungen zu dämpfen sind.

Im unterkritischen Drehzahlbereich ist eine sehr hohe Dämpfung erforderlich, da andernfalls die Eigenfrequenz des Torsionsschwingungsdämpfers zu einer deutlichen Überhöhung der Drehbeschleunigungen gegenüber der Primärseite führt.

Im überkritischen Drehzahlbereich, d. h. etwa über einer Motordrehzahl von 3000 U/min ist dagegen jede Dämpfung störend. Folglich ist in diesem Bereich jede Dämpfung zu vermeiden, so daß eine möglichst reibungsfreie Relativbewegung zwischen der Primär- und der Sekundärseite gefordert wird.

Bei bekannten Reibscheibendämpfern ist jeweils nur eine festeingestellte Reibkraft vorgesehen, die z. B. mittels ineinandergesteckter, federbelasteter Konen erzeugt wird. Ist die Reibkraft groß, so ergibt sich im unterkritischen Drehzahlbereich keine oder nur eine schwache Überhöhung der Drehbeschleunigung zwischen Primär- und Sekundärseite, was an sich erwünscht ist. Dafür ergeben sich im überkritischen Drehzahlbereich für die Sekundärseite untragbare Werte. Wählt man einen Reibscheibendämpfer mit schwacher Dämpfung, so ergibt sich im unterkritischen Drehzahlbereich eine deutliche Überhöhung der Drehzahlbeschleunigung zwischen der Primär- und der Sekundärseite, die äußerst unerwünscht ist, während die Werte im überkritischen Drehzahlbereich befriedigend sein können. Aus den vorgenannten physikalischen Gründen können Reibscheibendämpfer mit konstanter Dämpfung keine im ganzen Drehzahlbereich optimale Lösung bieten.

Andererseits sind mechanische Reibscheibendämpfer preiswert herstellbar und wesentlich billiger, als die komplizierteren hydraulischen Torsionsschwingungsdämpfer.

Ein Torsionsschwingungsdämpfer nach dem Oberbegriff des Patentanspruchs 1 ist aus der US-PS 3,296,887 bekannt. Dieser Schwingungsdämpfer hat jedoch den Nachteil, daß je nach Drehrichtung und Reibmoment unterschiedliche Kräfte an der Reibeinrichtung wirken. Dadurch ist die Dämpfung kaum den praktischen Erfordernissen entsprechend einstellbar. Außerdem benötigt die Einrichtung viel Bauraum im radial außen liegenden Bereich des Torsionsschwingungsdämpfers.

Der Erfindung liegt die Aufgabe zugrunde, einen Torsionsschwingungsdämpfer für den gesamten Drehzahlbereich zu schaffen, d. h. einen solchen, der im unterkritischen Drehzahlbereich mit sehr geringen Kräften eine möglichst hohe und im überkritischen Drehzahlbereich eine möglichst niedrige, möglichst drehzahlabhängig gesteuerte Dämpfung bewirkt. Ferner ist vorgesehen, den Schwingungsdämpfer so zu gestalten, daß er keinen zusätzlichen Bauraum in Anspruch nimmt, so daß er auch nachträglich gegen vorhandene, bekannte Schwingungsdämpfer austauschbar ist.

Die gestellte Aufgabe wird durch die kennzeichnenden Merkmale des Anspruchs 1 gelöst.

Das drehzahlabhängig wirkende Bestätigungsglied bewirkt eine mit wachsender Drehzahl abnehmende Andrückkraft auf die Reibeinrichtung und kann so eingestellt sein, daß die Andrückkraft bei Überschreiten der kritischen Drehzahl auf Null geht. Eine von Drehrichtung und Drehzahl unabhängige Dämpfung wird durch die Wirkung des Fliehkraftreglers in achsialer Richtung auf die Reibeinrichtung erreicht. Außerdem benötigt die Einrichtung extrem wenig Bauraum im radial außen liegenden Bereich des Schwingungsdämpfers und ermöglicht somit eine radial außen liegende Anordnung der Druckfedern.

Eine weitere Aufgabe der Erfindung besteht darin, den Torsionsschwingungsdämpfer so auszubilden, daß er außer der drehzahlgesteuerten Dämpfung eine zusätzliche drehmomentenabhängige Steuerung ermöglicht.

Bei zunehmendem übertragenem Drehmoment vergrößert sich der relative Verdrehwinkel zwischen dem Primär- und dem Sekundärteil des Schwingungsdämpfers. Wird dem Bestätigungsglied ein Drehmomentenwandler vorgeschaltet, dann ist es möglich, dem Bestätigungsglied eine drehmomentenabhängige Steuerung zu überlagern.

In den weiteren Unteransprüchen sind vorteilhafte Weiterbildungen der Erfindung angegeben.

Nachstehend ist die Erfindung anhand der Zeichnung näher erläutert. Es zeigt,
- Figur 1: einen Querschnitt durch einen Reibscheibendämpfer nach der Erfindung nach der Linie I-I in Fig. 2,
- Figur 2: einen axialen Längsschnitt nach der Linie II-II in Fig. 1, im unterkritischen Drehzahlbereich,
- Figur 3: den unteren Teil des in Fig. 2 dargestellten Reibscheibendämpfers im überkritischen Drehzahlbereich,
- Figur 4: eine vergrößerte Einzelheit in Fig. 2,
- Figur 5: eine andere vergrößerte Einzelheit der Fig. 2,
- Figur 6: einen achsialen Längsschnitt durch eine alternative Ausführungsform eines Reibscheibendämpfers im unterkritischen Drehzahlbereich und
- Figur 7: den oberen Teil des in Figur 6 dargestellten Reibscheibendämpfers im überkritischen Bereich.

Die Zeichnung zeigt ein antriebsseitiges Schwungrad 1 mit Reibelementen 2, die mit Reibelementen 3 einer Kupplung 4 zusammenwirken, die nur schematisch dargestellt ist. Zwischen den Reibelementen 2, 3 ist ein Blechring 5 eingeschlossen, der einen Teil des Primärteiles 6 eines Reibscheibendämpfers bildet. Das Primärteil 6 ist ein hohlscheibenartiges Gehäuse, das drehbar auf Kunststofflagern 7 sitzt, die ihrerseits auf einer Nabe 8 eines Sekundärteiles 9 angeordnet sind. Die Nabe 8 sitzt auf der Abtriebswelle 10.

Das Sekundärteil 9 ist im wesentlichen scheibenförmig ausgebildet und im Primärteil 6 aufgenommen. Es trägt mit radialem Abstand von der Drehachse 11 tangential angeordnete, relativ große Druckfedern 12, die sich an Ausschnitten des Primärteiles 6 abstützen und dieses mit dem Sekundärteil 9 elastisch koppeln. Die tangentialen Druckfedern 12 sind so angeordnet, daß sie zwischen den Primär- und Sekundärteilen 6, 9 ein Spiel über einen "inaktiven Verdrehwinkel" von z. B. 5° zulassen. Das Primär- und das Sekundärteil 6, 9 sind zueinander zentriert angeordnet.

An seinem Umfang trägt das Sekundärteil 9 eine Anzahl axial hintereinander angeordneter dünner Lamellenringe 13, zwischen die jeweils dickere Lamellenringe 14 ragen, die auf einer axialen Innenverzahnung 15 des Primärteiles 6 axial verschiebbar, und mit dem Primärteil 6 umlaufend angeordnet sind. Die Lamellenringe 13 sitzen auf einer axialen Außenverzahnung 16 des Sekundärteiles 9 und sind auf diesem ebenfalls axial verschiebbar.

Das aus den Lamellenringen 13, 14 bestehende Lamellenringpaket, das eine sehr große Reibfläche aufweist, bildet eine Reibeinrichtung 17, mit der die Drehschwingungen im unterkritischen Drehzahlbereich mit sehr geringen Kräften gedämpft werden können. Das Lamellenringpaket 13, 14 stützt sich rückwärtig an der Rückseite des Primärteiles 6 ab. An der Vorderseite des Lamellenringpaketes 13, 14 ist ein axial verstellbarer Druckring 18 angeordnet.

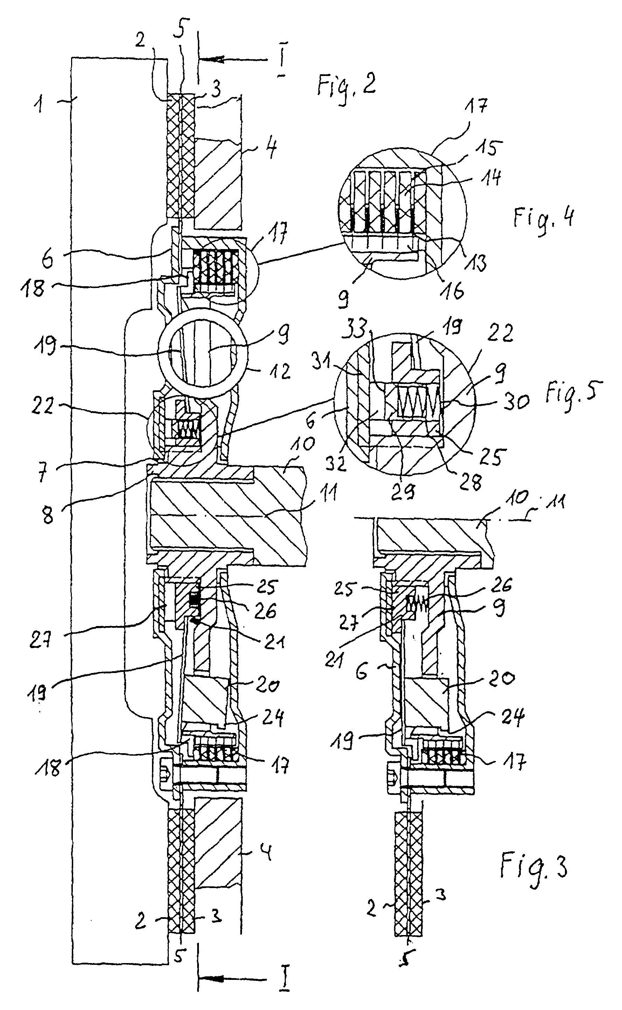

Im Raum zwischen diesem Druckring 18 und der Vorderseite des Primärteiles 6 sind radiale Blattfedern 19 angeordnet, die an ihren radial äußeren Enden Fliehgewichte 20 tragen. Die Blattfedern 19 bilden Betätigungsglieder für die Reibeinrichtung 17. In der in Fig. 2 dargestellten Stellung sind die Blattfedern 19 so gegen die Reibeinrichtung 17 verspannt, daß sie gegen den Druckring 18 drücken und damit mit sehr geringen Federkräften eine hohe Reibungskraft zwischen den sich axial verschiebenden Lamellenringen 13, 14 hervorrufen, die etwas nach rechts verschoben sind.

Die Blattfedern 19 und die Fliehgewichte 20 sind so eingestellt, daß sie bei der kritischen Drehzahl, z. B. bei etwa 3000 U/min, vom Druckring 18 nach links abheben und damit die Reibeinrichtung 17 freigeben (Fig. 3). Damit wird die von der Reibeinrichtung 17 ausgeübte Dämpfung drehzahlabhängig von einem Maximum im unterkritischen Drehzahlbereich auf ein Minimum, d. h. "Null" im überkritischen Drehzahlbereich zurückgeführt.

Bei etwa 4000 U/min legen sich die Fliehgewichte 20 mit einem Anschlag 24 am Sekundärteil 9 an, um eine Überbeanspruchung der Blattfedern 19 zu vermeiden.

Wie insbesondere Fig. 2 erkennen läßt, sind die inneren Enden der Blattfedern 19 an einem Kunststoffring 25 befestigt, der axial verschiebbar, aber auf einer Axialverzahnung mit der Nabe 8 umlaufend auf dieser angeordnet ist. Die rückwärtige Stirnwand des Kunststoffringes 25 ist mittels Axialfedern 26 an dem scheibenförmigen Sekundärteil 9 abgestützt, wodurch die vordere Stirnwand des Kunststoffringes 25 gegen tangentiale, am Primärteil befestigte Axialkeile 27 gedrückt wird. Sobald infolge eines zu übertragenden Drehmomentes sich der Relativdrehwinkel zwischen dem Primär- und dem Sekundärteil 6 bzw. 9 wesentlich ändert, verschiebt sich der Kunststoffring 25 relativ zu den Axialkeilen 27 um diesen Drehwinkel, wobei er axial auf der Nabe 8 gegen das Sekundärteil 9 verschoben wird. Damit werden auch die Blattfedern 19 um ein geringes Maß axial verschoben, so daß der drehzahlabhängigen Vorspannkraft des Betätigungsgliedes 19 eine lastabhängige Komponente der Vorspannkraft überlagert wird. Die Axialkeile 27 und der Kunststoffring 25 bilden damit einen Drehmomentenwandler 21.

Die Axialkeile 27 sind so ausgebildet, daß sie zunächst eine zur Querschnittsfläche parallele Fläche aufweisen, die dann in die Keilsteigung, ggf. nach einer Kurve übergeht. Auf diese Weise ergibt sich bei einer anfänglichen relativen Verdrehung des Primär- und des Sekundärteiles 6 bzw. 9, die auf dem Spiel zwischen diesen und den tangentialen Druckfedern 12 beruht, noch keine Aktion des Drehmomentenwandlers 21. Dieser Verdrehwinkel sei als "Totwinkel" bezeichnet. Er soll möglichst kleiner sein, als der "inaktive Verdrehwinkel", der sich aus dem Spiel der tangentialen Druckfedern 12 ergibt.

Fig. 2 zeigt dieBlattfedern 19 im unterkritischen Drehzahlbereich, aber bei Übertragung des vollen Drehmomentes, wobei die volle Vorspannkraft auf das Lamellenringpaket 13, 14 einwirkt. In Figur 3 sind die Blattfedern 19 im überkritischen Drehzahlbereich dargestellt, in dem sie keine Berührung mit dem Lamellenringpaket 13, 14 haben, und dieses keine Reibungskraft ausübt. Ferner ist auch der Drehmomentenwandler 21 in seiner Ruhestellung, d. h. der Kunststoffring 25 ist in seine Ruhestellung nach links verschoben.

Auf der Stirnseite des die Blattfeder 19 tragenden Kunststoffringes 25 ist zweckmäßig eine Einrichtung zur Leerlaufentkopplung 22 angeordnet (Idle-Entkopplung). Zu diesem Zweck weist der Kunststoffring 25 axiale Bohrungen 28 auf, in denen jeweils ein Zentrierkolben 29 geführt ist. Der Zentrierkolben 29 stützt sich über eine Druckfeder 30 am Sekundärteil 9 ab und drückt gegen eine flache Keilnut in der die Axialkeile 27 tragenden, umlaufenden Scheibe 31, die fest mit dem Primärteil 6 verbunden ist. Diese Scheibe 31 weist im Bereich der Zentrierkolben 29 Nocken 32 mit beiderseits der Keilnut angeordneten Keilebenen für den Zentrierkolben 29 auf, die dann in eine zur Querschnittsebene parallele Fläche 33 übergehen.

Beim Leerlauf können sich leichte Relativverdrehungen zwischen den Primär- und Sekundärteilen 6, 9 ergeben. Infolge der auf die Keilnut wirkenden federbelasteten Zentrierkolben 29 stellen sich Rückstellkräfte ein, die das Primärteil 6 und das Sekundärteil 9 wieder zueinander zentrieren.

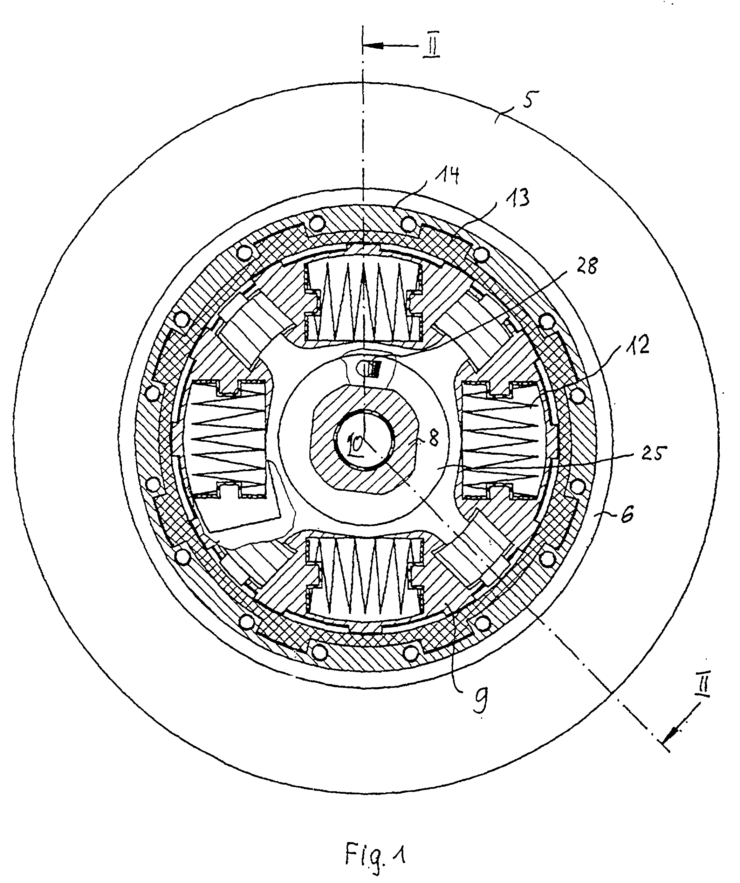

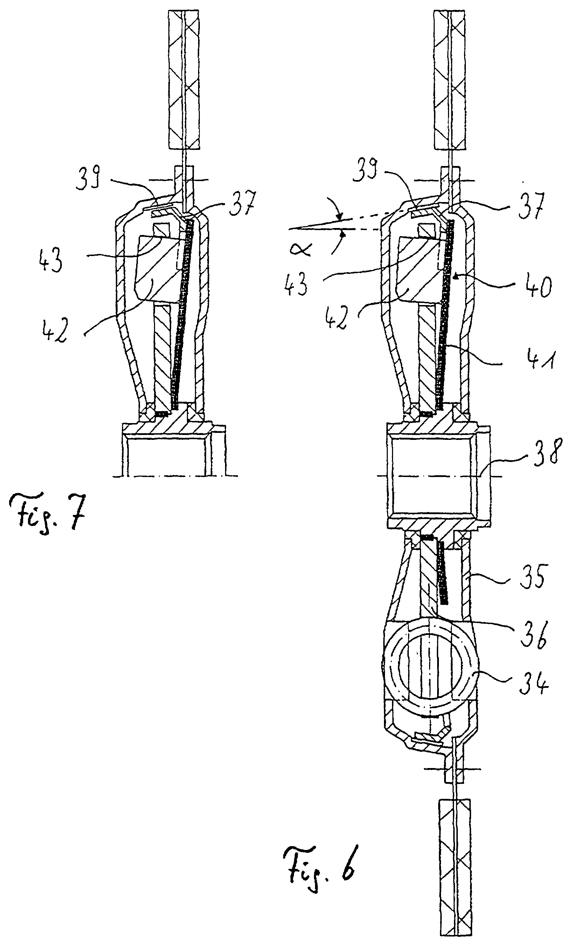

Eine alternative Ausführungsform der Reibeinrichtung zeigt Figur 6. Das Drehmoment wird wie bei dem Ausführungsbeispiel nach den Figuren 1 bis 5 über Federn 34 von dem Primärteil 35 auf das Sekundärteil 36 übertragen. Im Gegensatz zu dem zuvor beschriebenen Beispiel wird die Dämpfung jedoch über ein durch das Sekundärteil 36 betätigbares Reibelement 37 geleistet. Dieses Reibelement 37 ist in einem spitzen Winkel α zur Antriebswelle 38 angeordnet und kann gegen eine ebenso angeordnete Reibfläche 39 am Umfang des Primärteils 35 gedrückt werden.

Die für die Dämpfungsarbeit erforderliche Vorspannkraft wird durch eine Spinnenfeder 40 aufgebracht, die mit 4 Fingern 41 auf das als Reibkonus ausgebildete Reibelement 37 wirkt. An jedem der Finger 41 ist ein Fliehgewicht 42 angebracht, das bei etwa 3000 min/⁻¹ die Spinnenfedern gegen die Federkraft zurückstellt, so daß die Vorspannung des Reibelementes 37 und damit die Dämpfung auf nahezu "0" abgesenkt wird. Bei ca. 4000 min/⁻¹ legt sich das Fliehgewicht 42 an einen äußeren Anschlag 43 im Sekundärteil 36 an, um eine Überbeanspruchung der Spinnenfedern 40 auszuschließen.

Die Zurückstellung der Spinnenfeder 40 bei hohen Drehzahlen aufgrund der Zentrifugalkraft des Fliehgewichtes 42 zeigt Figur 7, bei der das Reibelement 37 sich vollständig von der Reibfläche 39 gelöst hat. Ein weiteres Ausschwenken des Reibelementes axial - in der Zeichnung nach rechts - wird durch den Anschlag 43 verhindert.

## Patentansprüche

1. Torsionsschwingungsdämpfer, mit einem Primärteil (6, 35), das über tangentiale Druckfedern (12, 34) mit einem Sekundärteil (9, 36), verbunden ist, wobei zwischen dem Primärteil (6, 35) und dem Sekundärteil (9, 36) eine mechanische oder hydraulische Reibeinrichtung (13, 14, 37, 39) vorgesehen ist, die mindestens ein mit dem Primär- (6, 35) oder Sekundärteil (9, 36) umlaufendes mit einem Fliehkraftregler (20, 42) verbundenes Betätigungsglied (19, 40) aufweist, dessen Einwirkung auf die Reibeinrichtung (13, 14, 37, 39) bei zunehmender Drehzahl abnimmt, **dadurch gekennzeichnet, daß** der Fliehkraftregler (20, 42) in achsialer Richtung auf die Reibeinrichtung (13, 14, 37, 39) einwirkt.

2. Torsionsschwingungsndämpfer nach Anspruch 1, **dadurch gekennzeichnet, daß** die tangentialen Druckfedern (12, 34) zwischen dem Primär- (6, 35) und dem Sekundärteil (9, 36) mit einem Spiel eingesetzt sind, das einen inaktiven Verdrehwinkel zwischen dem Primär- (6, 35) und dem Sekundärteil (9, 36) ergibt.

3. Torsionsschwingungsdämpfer nach einem der Ansprüche 1 oder 2, **dadurch gekennzeichnet, daß** das Sekundärteil (9, 36) Fliehgewichte (20, 42) aufweist und die Reibeinrichtung (13, 14, 37, 39) ein durch das Sekundärteil (9, 36) betätigbares Reibelement (13, 37) aufweist, das gegen das Primärteil (6, 35) drückbar ist.

4. Torsionsschwingungsdämpfer nach einem der Ansprüche 1 bis 3, **dadurch gekennzeichnet, daß** die Reibeinrichtung (17) aus einem Lamellenringpaket besteht, wobei das Primärteil (6) eine Anzahl axial hintereinander angeordneter und bewegbarer Lamellenringe (14) trägt, die jeweils zwischen axial bewegbar mit dem Sekundärteil (9) verbundende Lamellenringe (13) eingreifen, und daß am Primär- (6) oder Sekundärteil (9) angeordnete, mit diesem umlaufende und mit ihren äußeren Enden auf den ihnen zugewandten Lamellenring axial drückende Blattfedern (19) als Betätigungsglieder (19) vorgesehen sind, die an ihren äußeren, axialen Enden Fliehgewichte (20) als Fliehkraftregler tragen.

5. Torsionsschwingungsdämpfer nach einem der Ansprüche 1 bis 3, **dadurch gekennzeichnet, daß** das Reibelement (37) in einem spitzen Winkel α zur Antriebswelle angeordnet ist und gegen eine in einem spitzen Winkel zur Antriebswelle (38) angeordnete Reibfläche (39) am Primärteil (35) andrückbar ist.

6. Torsionsschwingungsdämpfer nach einem der Ansprüche 1 bis 5, **dadurch gekennzeichnet, daß** das bzw. die Betätigungsglied(er) (19, 40) axial bewegbar auf dem Primär- (6, 35) oder Sekundärteil (9, 36) geführt und an diesem axial gegen einen Drehmomentenwandler (21) abgestützt sind, der das bzw. die Betätigungsglied(er) (19, 40) in Abhängigkeit vom Drehwinkel zwischen dem Primär- (6, 35) und dem Sekundärteil (9, 36) axial verschiebt.

7. Torsionsschwingungsdämpfer nach einem der Ansprüche 1 bis 6, **dadurch gekennzeichnet, daß** das bzw. die Betätigungsglied(er) (19, 40) auf einer am Sekundär- (9, 36) oder Primärteil (6, 35) axial geführten und mit diesem umlaufenden Nabe (8) sitzen, die mittels einer am Sekundär- (9, 36) oder Primärteil (6,35) angreifenden Axialfeder (26) gegen einen am Primär- (6, 35) oder Sekundärteil (9, 36) angeordneten achsialwirkenden Keil (27) abgestützt ist.

8. Torsionsschwingungsdämpfer nach Anspruch 7, **dadurch gekennzeichnet, daß** der achsial wirkende Keil (27) des Drehmomentenwandlers (21) einen in der Querschnittsebene liegenden Teil aufweist, der einem bestimmten Verdrehwinkel zwischen Primär- und Sekundärteil (6, 9) entspricht, der als "Totwinkel" bezeichnet wird, und der keine axiale Kraft auf den Drehmomentenwandler (21) ausübt.

9. Torsionsschwingungsdämpfer nach Anspruch 8, **dadurch gekennzeichnet, daß** der Totwinkel des Drehmomentenwandlers (21) kleiner ist, als der inaktive Verdrehwinkel der tangentialen Druckfedern (12).

10. Torsionsschwingungsdämpfer nach einem der Ansprüche 1 bis 9, **dadurch gekennzeichnet, daß** eine Einrichtung (22) zur Leerlaufentkopplung vorgesehen ist, die aus einem am Sekundärteil (9) federnd abgestützten bewegbaren Zentrierkolben (29) gebildet ist, dessen Flanken sich an keilförmigen Flächen (32) des Primärteiles (6) abstützen.

## Claims

1. A torsional oscillation damper, having a primary part (6, 35), which is connected via tangential pressure springs (12, 34) with a secondary part (9, 36), with a mechanical or hydraulic friction device (13, 14, 37, 39) being provided, between the primary part (6, 35) and the secondary part (9, 36), which has at least one actuation element (19, 40), rotating with the primary part (6, 35) or secondary part (9, 36) and connected with a centrifugal governor (20, 42), whose effect on the friction device (13, 14, 37, 39) reduces with increasing speed, **characterized in that** the centrifugal governor (20, 42) acts on the friction device (13, 14, 37, 39) in the axial direction.

2. A torsional oscillation damper according to claim 1, **characterized in that** the tangential pressure springs (12, 34) are installed between the primary part (6, 35) and the secondary part (9, 36) with a play which results in an inactive twisting angle between the primary part (6, 35) and the secondary part (9, 36).

3. A torsional oscillation damper according to one of the claims 1 or 2, **characterized in that** the secondary part (9, 36) has centrifugal weights (20, 42) and the friction device (13, 14, 37, 39) has a friction element (13, 37), which can be actuated by the secondary part (9, 36), that can be pressed against the primary part (6, 35).

4. A torsional oscillation damper according to one of the claims 1 to 3, **characterized in that** the friction device (17) consists of a laminar ring assembly, with the primary part (6) carrying a number of laminar rings (14), which are positioned behind one another and are movable, that each engage between laminar rings (13), connected so they are axially movable with the secondary part (9), and that leaf springs (19), located on the primary part (6) or secondary part (9) and rotating with them, and pressing axially with their outer ends on the laminar ring facing them, are provided as actuation elements (19), which carry centrifugal weights (20) on their outer axial ends as the centrifugal regulator.

5. A torsional oscillation damper according to one of the claims 1 to 3, **characterized in that** the friction element (37) is located in an acute angle á to the driveshaft and can be pressed against a friction surface (39) on the primary part (35) located in an acute angle to the driveshaft (38).

6. A torsional oscillation damper according to one of the claims 1 to 5, **characterized in that** the actuation element(s) (19, 40) are guided on the primary part (6, 35) or the secondary part (9, 36) so they are axially movable and are axially supported on these parts against a torque converter (21), which displaces the actuation element(s) (19, 40) axially depending on the rotational angle between the primary part (6, 35) and the secondary part (9, 36).

7. A torsional oscillation damper according to one of the claims 1 to 6, **characterized in that** the actuation element(s) (19, 40) is/are seated on a hub (8), axially guided on the secondary part (9, 36) or the primary part (6, 35) and rotating with it, which is supported by means of an axial spring (26), engaging on the secondary part (9, 36) or primary part (6, 35), against an axially acting wedge (27) located on the primary part (6, 35) or the secondary part (9, 36).

8. A torsional oscillation damper according to claim 7, **characterized in that** the axially acting wedge (27) of the torque converter (21) has a part, lying in the cross-sectional plane, which corresponds to a specific twisting angle between the primary part and the secondary part (6, 9), referred to as the "dead angle", and which does not exercise any axial force on the torque converter (21).

9. A torsional oscillation damper according to claim 8, **characterized in that** the dead angle of the torque converter (21) is smaller than the inactive twisting angle of the tangential pressure springs (12).

10. A torsional oscillation damper according to one of the claims 1 to 9, **characterized in that** a device (22) for decoupling during idling is provided which is formed by a spring-loaded movable centering piston (29), supported on the secondary part (9), whose flanks are supported on wedge-shaped surfaces (32) of the primary part (6).

## Revendications

1. Amortisseur d'oscillations de torsion, avec une pièce primaire (6, 35), qui est liée à une pièce secondaire (9, 36) par des ressorts de compression tangentiels (12, 34), dans lequel un dispositif de frottement mécanique ou hydraulique (13, 14, 37, 39) est prévu entre la pièce primaire (6, 35) et la pièce secondaire (9, 36) et qui présente au moins un élément actionneur (19, 40) lié à un régulateur à force centrifuge (20, 42), tournant avec la pièce primaire (6, 35) ou la pièce secondaire (9, 36), élément dont l'action sur le dispositif de frottement (13, 14, 37, 39) diminue lorsque le nombre de tours augmente, **caractérisé en ce que** le régulateur à force centrifuge (20, 42) agit dans la direction axiale sur le dispositif de frottement (13, 14, 37, 39).

2. Amortisseur d'oscillations de torsion selon la revendication 1, **caractérisé en ce que** les ressorts à compression tangentiels (12, 34) sont mis en oeuvre avec un jeu entre la pièce primaire (6, 35) et la pièce secondaire (9, 36), qui donne un angle de torsion inactif entre la pièce primaire (6, 35) et la pièce secondaire (9, 36).

3. Amortisseur d'oscillations de torsion selon l'une quelconque des revendications 1 ou 2, **caractérisé en ce que** la pièce secondaire (9, 36) présente des masselottes centrifuges (20, 42) et le dispositif de frottement (13, 14, 37, 39) présente un élément de frottement (13, 37) actionnable par la pièce secondaire (9, 36), lequel peut être pressé contre la pièce primaire (6, 35).

4. Amortisseur d'oscillations de torsion selon l'une quelconque des revendications 1 à 3, **caractérisé en ce que** le dispositif de frottement (17) est constitué d'un empilement d'anneaux lamellaires, dans lequel la pièce primaire (6) porte un certain nombre d'anneaux lamellaires (14) mobiles et disposés axialement l'un derrière l'autre, qui s'engagent à chaque fois entre les anneaux lamellaires (13) liés de façon mobile axialement à la pièce secondaire (9), et **en ce que** des ressorts à lame (19) disposés sur la pièce primaire (6) ou la pièce secondaire (9), tournant avec celle-ci et pressant axialement avec leurs extrémités externes sur l'anneau lamellaire tourné vers eux, sont prévus en tant qu'éléments actionneurs (19), qui portent sur leurs extrémités externes, axiales, des masselottes centrifuges (20) en tant que régulateurs à force centrifuge.

5. Amortisseur d'oscillations de torsion selon l'une quelconque des revendications 1 à 3, **caractérisé en ce que** l'élément de frottement (37) est disposé à un angle aiguë α par rapport à l'arbre d'entraînement et peut être appliqué contre une surface de frottement (39) sur la pièce primaire (35), disposée à un angle aiguë par rapport à l'arbre d'entraînement (38).

6. Amortisseur d'oscillations de torsion selon l'une quelconque des revendications 1 à 5, **caractérisé en ce que** le ou les éléments actionneurs (19, 40) sont guidés de façon mobile axialement sur la pièce primaire (6, 35) ou la pièce secondaire (9, 36) et axialement calés sur celle-ci contre un variateur de couple de torsion (21), qui déplace axialement le ou les éléments actionneurs (19, 40) en fonction de l'angle de rotation entre la pièce primaire (6, 35) et la pièce secondaire (9, 36).

7. Amortisseur d'oscillations de torsion selon l'une quelconque des revendications 1 à 6, **caractérisé en ce que** le ou les éléments actionneurs (19, 40) reposent sur un moyeu (8) guidé axialement sur la pièce secondaire (9, 36) ou la pièce primaire (6, 35) et tournant avec celle-ci, qui est calé contre un coin (27) agissant axialement, disposé sur la pièce primaire (6, 35) ou la pièce secondaire (9, 36), au moyen d'un ressort axial (26) sollicitant la pièce secondaire (9, 36) ou la pièce primaire (6, 35).

8. Amortisseur d'oscillations de torsion selon la revendication 7, **caractérisé en ce que** le coin agissant axialement (27) du variateur de couple de torsion (21) présente une portion se trouvant dans le plan de section, qui correspond à un angle de torsion déterminé, entre la pièce primaire et la pièce secondaire (6, 9) qui est désigné par "angle mort" et qui n'exerce aucune force axiale sur le variateur de coupe de torsion (21).

9. Amortisseur d'oscillations de torsion selon la revendication 8, **caractérisé en ce que** l'angle mort du variateur de couple de torsion (21) est plus petit que l'angle de torsion inactif des ressorts de compression tangentiels (12).

10. Amortisseur d'oscillations de torsion selon l'une quelconque des revendications 1 à 9, **caractérisé en ce qu'**un dispositif (22) est prévu pour l'accouplement au ralenti, qui est formé d'un piston à centrer (29) mobile calé élastiquement sur la pièce secondaire (9), piston dont les flancs sont calés sur des surfaces (32) en forme de coin de la pièce primaire (6).
